# EUROPEAN PATENT APPLICATION

(11) **EP 4 468 564 A2**
(43) Date of publication of application: **27.11.2024**
(21) Application number: 24172636.3
(22) Date of filing: 26.04.2024
(51) Int. Cl.: H02K 1/16, H02K 15/06

(54) **SPLIT-TYPE MOTOR STATOR AND MANUFACTURING METHOD THEREOF**

(30) Priority: 23.05.2023 KR 20230066137
(71) Applicant: Hyundai Mobis Co., Ltd., Seoul 06141 (KR)
(72) Inventor: SEO, Yeong Woo, 16891 Yongin-si, Gyeonggi-do (KR)
(74) Representative: Frenkel, Matthias Alexander

(57) **Abstract**

The present invention relates to a stator included in an electric motor. According to a split-type motor stator and manufacturing method thereof according to the present invention, a stator core is separated into an inner core and an outer core so that an entrance of a slot into which a coil is inserted can be opened and closed, thereby compensating for problems of a continuous winding method and achieving advantages of a hairpin winding method.

## Description

### TECHNICAL FIELD

The following disclosure relates to a stator included in an electric motor.

### BACKGROUND

A coil winding method used in a conventional motor stator is largely divided into two types: hairpin winding and continuous winding. The hairpin winding method is a method of sequentially inserting square copper wire coils formed into a U shape (hairpin shape) into slots of a stator core in an axial direction, and then welding and connecting ends of each coil. The hairpin winding method is advantageous in terms of process simplification because the process is completed by inserting the square copper wire coil between stator shoes without the need to manufacture a winding bundle in advance, but is inefficient in terms of production cost and time because it requires welding end portions of the plurality of square copper wire coils and then layering a protective coating. In addition, as there are the plurality of welding sites, welding defects inevitably occur. In addition, in the case of the hairpin winding method, there was a problem in that an axial length of the stator became longer as the end portion of the square copper wire coil that requires welding protruded long to the outside of the stator.

In addition, the continuous winding method is a method of bending a square copper wire coil without breaking the square copper wire coil, performing coil welding only at limited locations to make a winding bundle, and then radially inserting the winding bundle into a slot of a stator core. The continuous winding method has the advantage of increasing the ease of assembly between the stator and the winding by allowing the pre-fabricated winding to be inserted into the stator at once, and has an advantage over the hairpin winding method in terms of production cost and time because there are not many welded areas by making each winding strand intertwined to support each position In addition, the continuous winding method has the advantage of reducing the axial length of the stator compared to the hairpin winding method since each winding strand is intertwined so that the ends thereof do not protrude outside the stator. However, the continuous winding method also has a problem. Since the winding bundle is inserted into the radial direction of the stator, the shoes protruding from the end portions of the existing stator teeth are to be removed, and as a result, the stator teeth remain separated from each other even after the winding bundle is inserted. As a result, the continuous winding method has the problem of low NVH performance since the empty space increases and thus cogging torque ripple occurs.

### [Related Art Document]

### [Patent Document]

(Patent Document 1) Korea Patent Laid-Open Publication No. 10-2020-0016088 "Stator Fabricating Method for Hairpin Winding Motor" February 14, 2020

### SUMMARY

An embodiment of the present invention is directed to providing a split-type motor stator that is configured to separate a stator core into an inner core and an outer core so that an entrance of a slot into which a coil is inserted can be opened and closed to compensate for problems of a continuous winding method, thereby having advantages of a hairpin winding method, and a manufacturing method thereof.

More specifically, an embodiment of the present invention is directed to providing a split-type motor stator that is configured to separate a stator core into an inner core and an outer core so that an entrance of a slot into which a coil is inserted can be opened and closed, thereby reducing wasted scrap by using split cores instead of whole cores to save material costs, removing the welding and coating processes on a coil to improve a defect rate, connecting shoes to each other even after a winding bundle is inserted to remove cogging torque ripple and improve NVH performance, inserting the coil into the slot with the coil in close contact to increase a coil acceptance rate and secure a high loading rate, and reducing a motor size to reduce an axial coil length.

In one general aspect, a split-type motor stator having a coil assembly, which includes a plurality of coil strands, provided therein includes: a first core located on a first side in a direction of a rotation axis of the coil assembly and including a receiving groove into which the coil strand is inserted; and a second core located on a second side of the coil assembly and coupled to the first core to fix a position of the coil assembly.

The first core may include a first central portion shaped of a hollow cylinder, and partition walls protruding in a radial direction from an outer peripheral surface of the first central portion, the partition walls may be spaced apart from each other at regular intervals along the outer peripheral surface of the first central portion, and the receiving groove may be a space formed surrounded by the partition walls and the first central portion.

The partition walls adjacent to each other may be formed so that opposing surfaces are in parallel.

The second core may include: a second central portion shaped of the hollow cylinder, and a coupling protrusion formed to protrude on an inner peripheral surface of the second central portion, but formed at a position corresponding to the partition wall so that a protruding surface contacts the protruding surface of the partition wall.

The second core may be formed by assembling a plurality of pieces divided in a circumferential direction thereof.

The partition wall may have a protrusion or a groove formed on the protruding surface, and the protruding surface of the coupling protrusion may be formed with a protrusion or a groove to correspond to a shape of one end surface of the partition wall.

The split-type motor stator may further include a fixing member coupled to an outer peripheral surface of the second core and compressing the second core in the radial direction.

In another general aspect, a method of manufacturing a split-type motor stator includes: (a) manufacturing and preparing a first core and a second core to be coupled to each other; (b) assembling the first core and a coil assembly by inserting a coil strand into a receiving groove of the first core; and (c) assembling the first core and the second core to fix a position of the coil assembly.

The step (c) may include: (c1) assembling a plurality of pieces constituting the second core to the first core, respectively, and (c2) inserting a fixing member into an outer peripheral surface of the second core to compress the second core in a radial direction.

The step (a) may include: (a1) forming a protrusion or a groove on a protruding surface of a partition of the first core; and (a2) forming a protrusion or a groove corresponding to a shape of one end surface of the partition wall on the protruding surface of the coupling protrusion of the second core.

### BRIEF DESCRIPTION OF THE DRAWINGS

FIG. 1 is an exploded view illustrating a split-type motor stator of the present invention.
FIG. 2 is a top view illustrating a first core of the present invention.
FIG. 3 is a top view illustrating a second core of the present invention.
FIG. 4 is a partial top view illustrating a split-type motor stator of the present invention.
FIG. 5 is a partial top view illustrating an embodiment of the split-type motor stator of the present invention.
FIG. 6 is a flowchart illustrating a method of manufacturing a split-type motor stator of the present invention.
FIG. 7 is a perspective view illustrating the split-type motor stator in a step of manufacturing a core in the method of manufacturing a split-type motor stator of the present invention.
FIG. 8 is a perspective view illustrating a split-type motor stator in a step of assembling a first core and a coil assembly in the method of manufacturing a split-type motor stator of the present invention.
FIG. 9 is a flowchart illustrating detailed steps of a step of assembling a second core in the method of manufacturing a split-type motor stator of the present invention.
FIG. 10 is a perspective view illustrating the split-type motor stator in the step of assembling the second core.

### [Detailed Description of Main Elements]

1000: Split-type motor stator
100: First core
110: Receiving groove
120: First central portion
130: Partition wall
200: Second core
210: Second central portion
212: Coupling protrusion
300: Fixing member
C: Coil assembly

### DETAILED DESCRIPTION OF EMBODIMENTS

Hereinafter, the technical spirit of the present invention will be described in more detail with reference to the accompanying drawings. Terms and words used in the present specification and claims are not to be construed as a general or dictionary meaning, but are to be construed as meaning and concepts meeting the technical ideas of the present invention based on a principle that the present inventors may appropriately define the concepts of terms in order to describe their inventions in best mode.

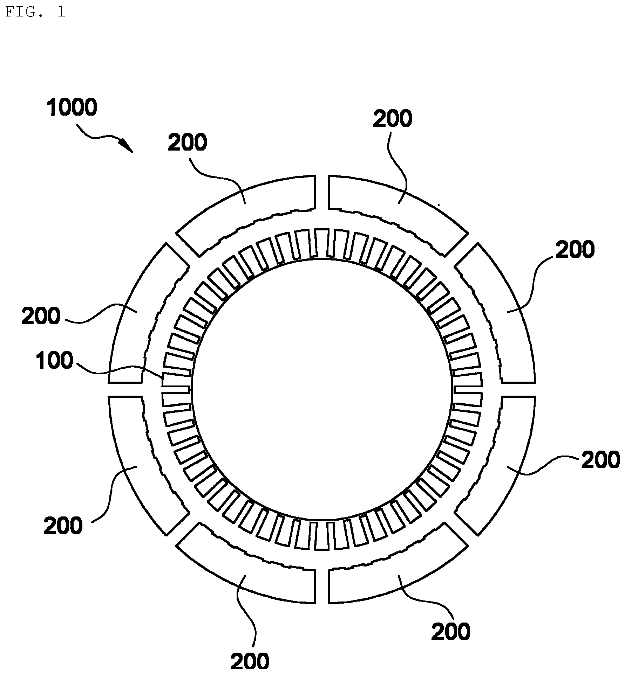

Hereinafter, a basic configuration of a split-type motor stator 1000 of the present invention will be described with reference to FIG. 1.

The present invention relates to a split-type motor stator 1000 having a coil assembly C, which includes a plurality of coil strands, provided therein. As illustrated in FIG. 1, the split-type motor stator 1000 of the present invention includes a first core 100 and a second core 100, and the first core 100 and the second core 200 may be manufactured individually and assembled when inserting the coil assembly C. In more detail, the first core 100 may be located closer to a rotation axis or a rotor than the second core 200, that is, located on the inside, may be located closer to the rotation axis with respect to the coil assembly C, and include a receiving groove 110 into which the coil strand is inserted. In addition, the second core 200 may be located farther away from the rotation axis or rotor than the first core 100, that is, on the outside. More specifically, it may be located farther away from the rotation axis with respect to the coil assembly C. The second core 200 may be coupled to the first core 100 to fix the position of the coil assembly C.

In this way, in the split-type motor stator 1000 of the present invention, the first core 100 and the second core 200 may be separately formed to increase the coupling performance with the coil assembly C, and the coil assembly C is inserted into the first core 100 located on the inside, that is, the coil assembly C is inserted from the outside to the inside and only the outside of the second core 200 is compressed, so a significant portion of a gap between coil strands may be removed and a coil size may be increased by the amount of empty space. As a result, it is possible to secure a higher loading rate compared to the related art (reduction in resistance, improvement in efficiency).

In an embodiment of the split-type motor stator 1000 of the present invention, the second core 200 may be formed in a shape of a hollow cylinder, and may be formed in a form in which a plurality of pieces divided along a circumferential direction are assembled. In this case, the pieces constituting the second core 200 may be equally divided into the same size and shape. In this way, the second core 200 is formed by being divided into a plurality of pieces, so even if an outermost outer diameter of the first core 100 and an innermost inner diameter of the second core 200 are designed to be the same (minimizing gaps), the first core 100 and the second core 200 may be easily coupled without the need for being fitted.

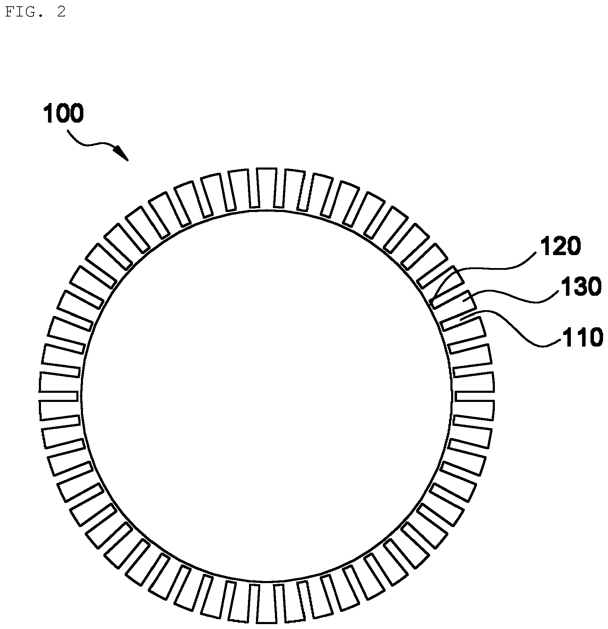

Hereinafter, the first core 100 of the present invention will be described in more detail with reference to FIG. 2.

As illustrated in FIG. 2, the first core 100 may include a first central portion 120 in the shape of a hollow cylinder and partition walls 130 protruding in a radial direction from an outer peripheral surface of the first central portion 120. The partition walls 130 are formed to be spaced apart from each other at regular intervals along the outer peripheral surface of the first central portion 120, and the receiving groove 110 may be a space formed surrounded by the partition wall 130 and the first central portion 120. In this case, the distance between the partition walls 130, that is, the width of the receiving groove 110, may be equal to a thickness of the coil strand of the coil assembly C, or may be longer than a predetermined clearance length. That is, the partition walls 130 may be allow the coil assembly C to be inserted and fixed in a space therebetween. In this case, the partition walls 130 adjacent to each other may be formed so that opposing surfaces are in parallel. That is, a cross-sectional area of the partition wall 130 may become wider as the partition wall 130 is farther away from the first central portion 120, that is, as it moves outward. Accordingly, the shape of the receiving groove 110 in which the coil assembly C is received may be formed in the shape of a rectangular parallelepiped with one side open, and when the coil strands are stacked along the radial direction in the receiving groove 110, each coil strand may be supported with uniform force regardless of its position.

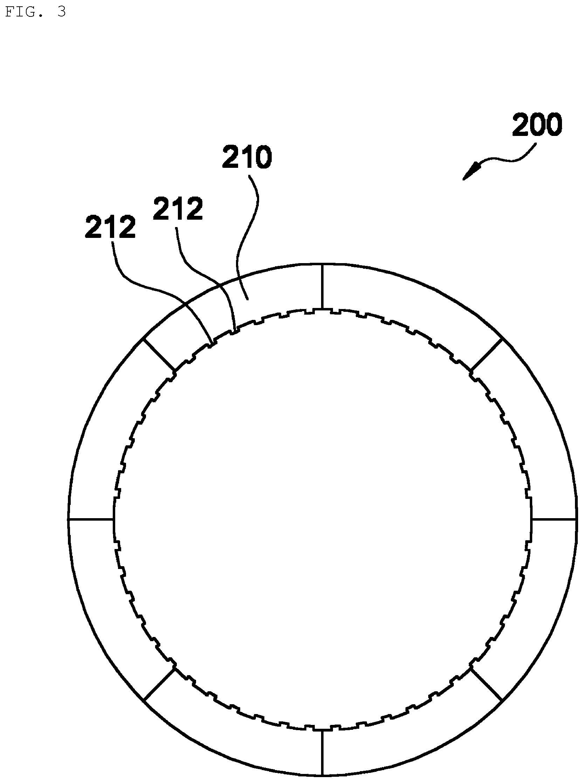

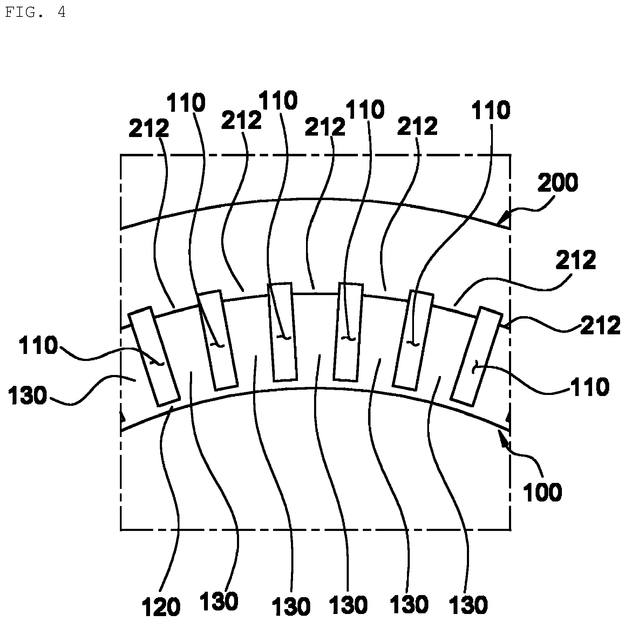

Hereinafter, the coupling relationship between the second core 200 and the first core 100 of the present invention will be described in more detail with reference to FIGS. 3 and 4.

As illustrated in FIG. 3, the second core 200 includes a second central portion 210 in the shape of a hollow cylinder, and a coupling protrusion 212 that protrudes from an inner peripheral surface of the second central portion 210 and formed at a position corresponding to the partition wall 130. The second central portion 210 and the coupling protrusion 212 may be formed integrally.

In an embodiment of the split-type motor stator 1000 of the present invention described above, when the second core 200 is formed by assembling a plurality of pieces, a boundary of each piece may only be formed at a location that does not divide the coupling protrusion 212. Accordingly, it is possible to prevent the coupling force between the coupling protrusion 212 and the partition wall 130 from being reduced due to the boundary surface of the pieces.

As illustrated in FIG. 4, the coupling protrusion 212 of the second core 200 may be coupled so that an end protruding surface is in contact with an end protruding surface of the partition wall 130 of the first core 100. Since the second core 200 includes the protruding coupling protrusion 212, when the first core 100 and the second core 200 are coupled, the coupling position of the first core 100 and the second core 200 may be fixed. Furthermore, the protruding surface of the partition wall 130 may be formed with a protrusion or a groove, and the protruding surface of the coupling protrusion 212 may be formed with a protrusion or a groove to correspond to the shape of the one end surface of the partition wall 130. Accordingly, the coupling strength of the coupling protrusion 212 and the partition wall 130 increases, thereby improving the structural stability of the split-type motor stator 1000 of the present invention.

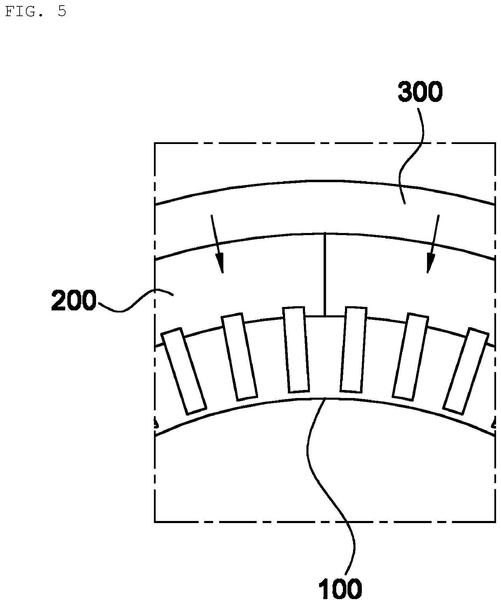

Hereinafter, a fixing member 300 of the present invention will be described in more detail with reference to FIG. 5.

As illustrated in FIG. 5, the split-type motor stator 1000 of the present invention may further include the fixing member 300 to strengthen the coupling force of the first core 100 and the second core 200. In more detail, the fixing member 300 may be coupled to an outer peripheral surface of the second core 200, so the second core 200 may be compressed in the radial direction. When applied to a case in which the second core 200, which is an embodiment of the above-described split-type motor stator 1000, is formed of a plurality of pieces, the effect may be maximized. As illustrated in FIG. 5, the fixing member 300 may be a support ring fitted in an outer surface of the second core 200, or may be carbon fiber wound around the outer surface of the second core 200.

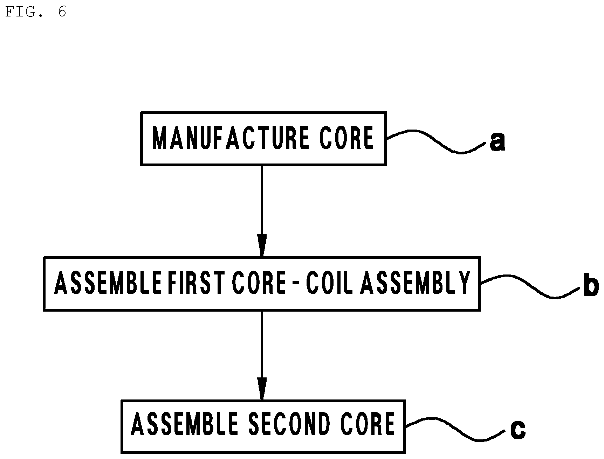

Hereinafter, the method of manufacturing a split-type motor stator 1000 of the present invention will be described in more detail with reference to FIGS. 6 to 10.

As illustrated in FIG. 6, the present invention relates to a method of manufacturing a split-type motor stator 1000, and the method may include (a) manufacturing and preparing the first core 100 and the second core 200 to be coupled to each other; (b) assembling the first core 100 and the coil assembly C by inserting the coil strand into the receiving groove 110 of the first core 100; and (c) assembling the first core 100 and the second core 200 to fix the position of the coil assembly C.

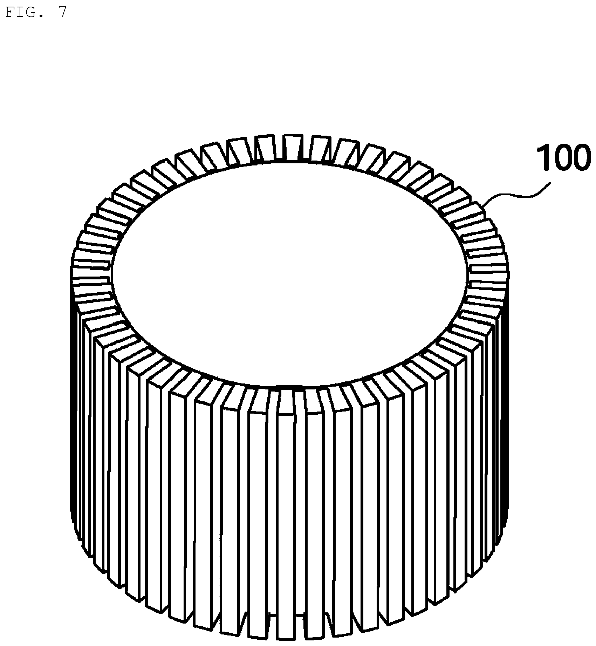

In more detail, as illustrated in FIG. 7, in step (a), the first core 100 having a plurality of receiving grooves 110 and having a hollow center and the second core 200 formed to correspond to the first core 100 may be manufactured. The size of the receiving groove 110 of the first core 100 may be designed in consideration of the thickness of the coil strand of the coil assembly C.

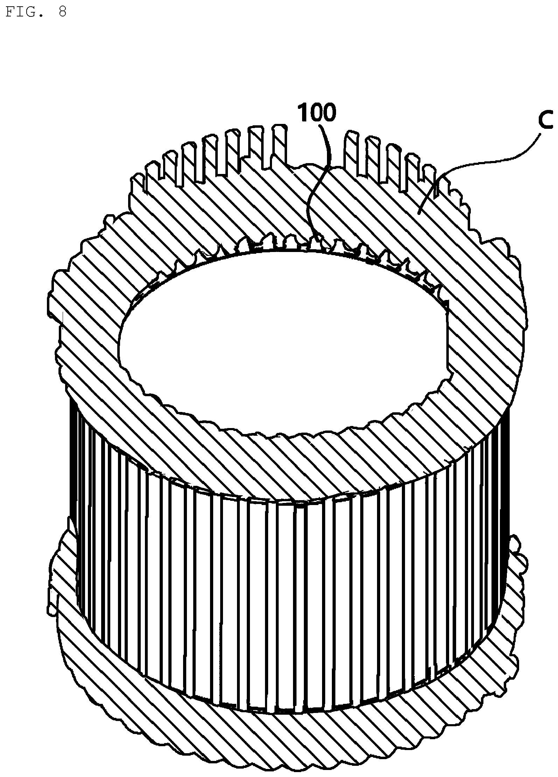

In step (b) performed later, as illustrated in FIG. 8, the coil assembly C manufactured by a continuous winding method may be fitted and coupled to the receiving groove 110 of the first core 100. In this case, the coil assembly C may be inserted into the first core 100 from the outside to the inside, so a significant portion of the gap between the coil strands may be removed simply by compressing the outside of the second core 200 and the higher loading rate may be secured than the related art.

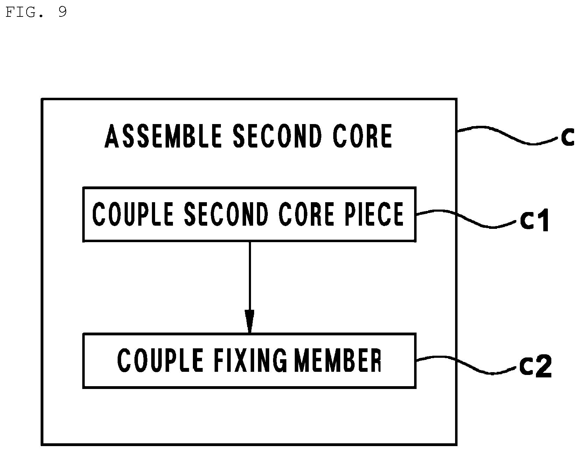

In an embodiment of the split-type motor stator 1000 of the present invention, as illustrated in FIG. 9, step (c) may include (c1) assembling the plurality of pieces forming the second core 200 to the first core 100, respectively, and (c2) inserting the fixing member 300 into the outer peripheral surface of the second core 200 and compressing the second core 200 in the radial direction.

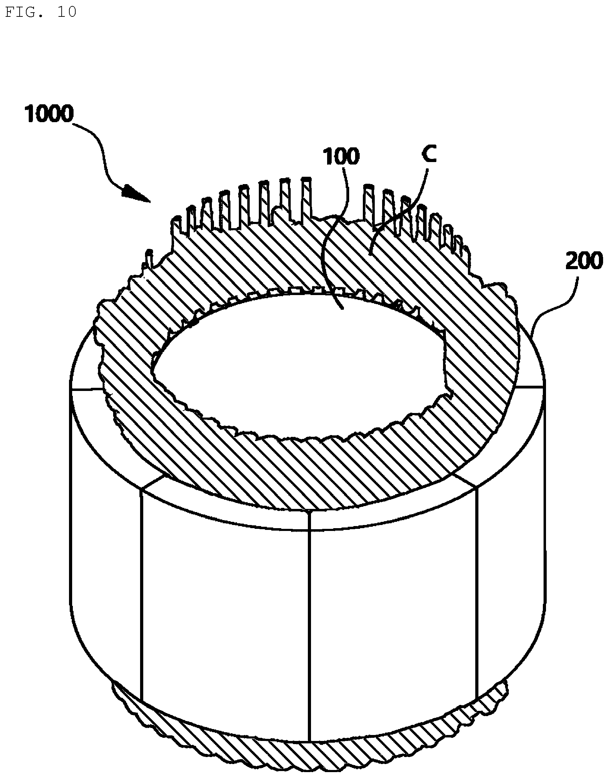

In this case, in step (c1), the pieces constituting the second core 200 may be divided in a circumferential direction and may be equally divided into the same size and shape. In this way, the second core 200 is formed by being divided into a plurality of pieces, so even if an outermost outer diameter of the first core 100 and an innermost inner diameter of the second core 200 are designed to be the same (minimizing gaps), the first core 100 and the second core 200 may be easily coupled without the need for being fitted. In addition, in step (c2), the fixing member 300 may be a support ring fitted in an outer surface of the second core 200, or may be carbon fiber wound around the outer surface of the second core 200. By performing step (c), it is possible to finally configure the motor stator with coils wound in the form illustrated in FIG. 10.

Furthermore, in an embodiment of the method of manufacturing a split-type motor stator 1000, step (a) preferably includes (a1) forming the protrusion or groove on the protruding surface of the partition wall 130 of the first core 100 and (a2) forming the protrusion or groove corresponding to the one end surface shape of the partition wall 130 on the protruding surface of the coupling protrusion 212 of the second core 200. Accordingly, the coupling strength of the coupling protrusion 212 and the partition wall 130 increases, thereby improving the structural stability of the split-type motor stator 1000 of the present invention.

According to the split-type motor stator and its manufacturing method of the present invention according to the configuration as described above, the stator core is separated into the inner core and outer core so that the entrance of the slot into which the coil is inserted can be opened and closed, thereby compensating for the problems of the continuous winding method and achieving the advantages of the hairpin winding method.

More specifically, by separating the stator core into the inner core and outer core so that the entrance of the slot into which a coil is inserted can be opened and closed, it is possible to reduce wasted scrap by using split cores instead of whole cores to save material costs, remove the welding and coating processes on the coil to improve a defect rate, connect shoes to each other even after a winding bundle is inserted to remove cogging torque ripple and improve NVH performance, insert the coil into the slot with the coil in close contact to increase a coil acceptance rate and secure a high loading rate, and reduce a motor size to reduce an axial coil length.

The present invention should not be construed to being limited to the above-mentioned exemplary embodiment. The present invention may be applied to various fields and may be variously modified by those skilled in the art without departing from the scope of the present invention claimed in the claims. Therefore, it is obvious to those skilled in the art that these alterations and modifications fall in the scope of the present invention.

## Claims

1. A split-type motor stator having a coil assembly, which includes a plurality of coil strands, provided therein, the split-type motor stator comprising:
a first core located on a first side of the coil assembly in a direction of a rotation axis of the coil assembly and including receiving grooves into which the coil strands are inserted; and
a second core located on a second side of the coil assembly and coupled to the first core to fix a position of the coil assembly.

2. The split-type motor stator of claim 1, wherein the first core includes:
a first central portion shaped of a hollow cylinder, and
partition walls protruding in a radial direction from an outer peripheral surface of the first central portion,
wherein the partition walls are spaced apart from each other at regular intervals along the outer peripheral surface of the first central portion, and
wherein each receiving groove is a space formed surrounded by the partition walls and the first central portion.

3. The split-type motor stator of claim 2, wherein the partition walls adjacent to each other are formed so that opposing surfaces of the partition walls are in parallel.

4. The split-type motor stator of claim 2 or 3, wherein the second core includes:
a second central portion shaped of the hollow cylinder, and
a coupling protrusion formed to protrude on an inner peripheral surface of the second central portion, and formed at a corresponding partition wall of the first core so that a protruding surface of the coupling protrusion contacts a protruding surface of the corresponding partition wall.

5. The split-type motor stator of claim 4, wherein the second core is formed by assembling a plurality of pieces divided in a circumferential direction thereof.

6. The split-type motor stator of claim 5, wherein a boundary of each piece is formed at a location that does not divide the coupling protrusion.

7. The split-type motor stator of any one of claims 4 to 6,
wherein the partition wall includes a protrusion or a groove formed on the protruding surface thereof, and
wherein the protruding surface of the coupling protrusion is formed with a protrusion or a groove to correspond to a shape of one end surface of the partition wall.

8. The split-type motor stator of any one of claims 5 to 7, further comprising:
a fixing member coupled to an outer peripheral surface of the second core and compressing the second core in the radial direction.

9. A method of manufacturing a split-type motor stator, the method comprising:
(a) manufacturing and preparing a first core and a second core to be coupled to each other;
(b) assembling the first core and a coil assembly by inserting a coil strand into a receiving groove of the first core; and
(c) assembling the first core and the second core to fix a position of the coil assembly.

10. The method of claim 9, wherein the step (c) includes:
(c1) assembling a plurality of pieces constituting the second core to the first core, respectively, and
(c2) inserting a fixing member into an outer peripheral surface of the second core to compress the second core in a radial direction thereof.

11. The method of claim 10,
wherein a boundary of each piece is formed at a location that does not divide a coupling protrusion of the second core, and
Wherein the coupling protrusion of the second core is formed at a corresponding partition wall of the first core so that a protruding surface of the coupling protrusion contacts a protruding surface of the corresponding partition wall.

12. The method of any one of claims 9 to 11, wherein the step (a) includes:
(a1) forming a protrusion or a groove on a protruding surface of a partition wall of the first core; and
(a2) forming a protrusion or a groove corresponding to a shape of one end surface of the partition wall on a protruding surface of a coupling protrusion of the second core.

13. The method of claim 12, wherein the step (a) includes:
mounting the protruding surface of the coupling protrusion to contact the protruding surface of the partition wall.
